**Europäisches Patentamt**

**European Patent Office**

**Office européen des brevets**

(19)

(11) Veröffentlichungsnummer : **0 153 338 B2**

(12) **NEUE EUROPÄISCHE PATENTSCHRIFT**

(45) Veröffentlichungstag der neuen Patentschrift :
**22.04.92 Patentblatt 92/17**

(51) Int. Cl.⁵ : **H02K 3/04,** H02K 1/27,
H02K 29/00, G01P 3/46

(21) Anmeldenummer : **84902910.3**

(22) Anmeldetag : **24.07.84**

(86) Internationale Anmeldenummer :
**PCT/DE84/00156**

(87) Internationale Veröffentlichungsnummer :
**WO 85/01158 14.03.85 Gazette 85/07**

(54) **ELEKTRISCHE MASCHINE.**

(30) Priorität : **27.08.83 DE 3331002**

(43) Veröffentlichungstag der Anmeldung :
**04.09.85 Patentblatt 85/36**

(45) Bekanntmachung des Hinweises auf die
Patenterteilung :
**10.06.87 Patentblatt 87/24**

(45) Bekanntmachung des Hinweises auf die
Entscheidung über den Einspruch :
**22.04.92 Patentblatt 92/17**

(84) Benannte Vertragsstaaten :
**AT CH DE FR GB LI**

(56) Entgegenhaltungen :
**DE-A- 2 449 090**

(56) Entgegenhaltungen :
**DE-A- 3 200 418**
**DE-B- 2 346 380**
**DE-C- 2 313 637**
**FR-A- 1 531 875**
**FR-A- 2 445 646**
**FR-A- 2 457 031**
**US-A- 2 305 125**
**US-A- 3 809 936**

(73) Patentinhaber : **ROBERT BOSCH GMBH**
**Robert-Bosch-Platz 1**
**W-7016 Gerlingen-Schillerhöhe (DE)**

(72) Erfinder : **BASSLER, Ralf**
**Jeichelweg 58**
**W-7582 Bühlertal (DE)**
Erfinder : **BETSCH, Hartmut**
**Hindenburgstrasse 129**
**W-7582 Bühlertal (DE)**

EP 0 153 338 B2

Jouve, 18, rue Saint-Denis, 75001 PARIS

## Beschreibung

### Stand der Technik

Die Erfindung geht aus von einer elektrischen Maschine, insbesondere von einem bürstenlosen Gleichstrommotor oder Tachogenerator, nach der Gattung des Hauptanspruches. Eine derartige elektrische Maschine mit einer im Luftspalt liegenden Wicklung ist bekannt aus der DE-OS 25 11 567. Bei der dort beschriebenen dreiphasigen Anordnung weist jede Phase der Wicklung wenigstens zwei über den Stator gleichmäßig verteilte Formspulen auf, welche im wesentlichen gleich ausgebildet und derart angeordnet sind, daß an den Kreuzungsstellen der Spulenköpfe jeweils der Kopf der in Umfangsrichtung nachfolgenden Spule und Phase über der vorherigen Spule liegt. Mit einer derartig überlappenden Wicklungsanordnung erreicht man eine gleichmäßigere Stromaufteilung in den einzelnen Phasen der Wicklung gegenüber einer herkömmlichen Anordnung, bei der die Formspulen in Umfangsrichtung hintereinandergereiht sind. Dennoch bleiben Unregelmäßigkeiten im Verlauf der induzierten Spannung, welche sich insbesondere bei hohen Drehzahlen oder bei der Verwendung der induzierten Spannung zu Meßzwecken bei Tachogeneratoren sehr nachteilig bemerkbar machen. Diese Schwankungen der induzierten Spannung und des Stromes sind im wesentlichen dadurch bedingt, daß die einzelnen Spulenhälften aufgrund ihrer unterschiedlichen Abstände zu den Magnetpolen von unterschiedlichen Flüssen durchsetzt sind, weshalb die näher bei den Magnetpolen liegenden Spulenhälften eine höhere induzierte Spannung aufweisen. Beim Umschalten von einer Spule zur nächsten in Umfangsrichtung nachgeordneten Spule ergeben sich in der abgegriffenen Spannung eines Generators Schwankungen und Sprünge, welche vermieden werden sollen.

Aus der DE-C 23 13 637 ist eine Vierschichtwicklung für elektrische Drehstrommaschinen bekannt, welche aus zwei übereinander in den Ständernuten angeordneten Wicklungslagen aus gesehnten, zweischichtigen Sechszonenwicklungen besteht, die gegeneinander um einen von der Polteilung abweichenden Umfangswinkel verschoben sind, wodurch sich eine unsymmetrische Anordnung ergibt, bei der nicht zwei gleiche Teilspulen jeder Spule auf dem Träger symmetrisch zur Mittellinie übereinander angeordnet sind. Somit ergeben sich auch nicht in allen Sektoren des Stators jeweils gleichhohe induzierte Spannungen.

### Vorteile der Erfindung

Die erfindungsgemäße elektrische Maschine mit den kennzeichnenden Merkmalen des Hauptanspruchs hat demgegenüber den Vorteil, daß eine wesentliche Verringerung der Welligkeit der induzierten Spannung mit einfachen schaltungstechnischen und baulichen Maßnahmen erreicht wird. In den einzelnen Phasen der Wicklung ergibt sich eine gleichmäßige Stromaufteiluung, so daß die eingangs beschriebenen Schwierigkeiten bei hohen Drehzahlen von Motoren oder bei der Erzeugung einer Meßspannung praktisch nicht mehr auftreten. Durch die Aufteilung jeder Spule in zwei im wesentlichen gleiche Teilspulen mit gleicher Windungszahl wird in Umfangsrichtung an allen Stellen der Gesamtspule im Mittel eine gleichhohe Spannung induziert. Bei Verwendung identischer Teilspulen, welche die gleiche Spulenweite und die gleiche Windungszahl haben, ergeben sich besonders einfache Verhältnisse beim Zusammenbau der Maschine, da gleiche, vorgefertigte Teilspulen für alle Spulen und Phasen der gesamten Wicklung verwendet werden können.

Durch die in den Unteransprüchen aufgeführten Maßnahmen sind vorteilhafte Weiterbildungen und Verbesserungen der im Hauptanspruch angegebenen elektrischen Maschine möglich. Hierbei hat es sich als besonders zweckmäßig erwiesen, wenn die Spulen überlappend derart angeordnet sind, daß im Kreuzungsbereich der Spulenköpfe in einer Umfangsrichtung die nachfolgenden Teilspulen die vorhergehenden Teilspulen beiderseits außen umgreifen und in der anderen Umfangsrichtung die nachfolgenden Teilspulen innerhalb der vorhergehenden Teilspulen liegen. Bei einer derartigen Anordnung ergibt sich eine optimale Symmetrierung und minimale Unterschiede hinsichtlich der Höhe der in den verschiedenen Spulen induzierten Spannungen.

Ein besonders zweckmäßiger und einfacher Aufbau ergibt sich besonders dann, wenn eine vierpolige Ausführung des Rotors mit vier Spulen je Polpaar verwendet wird, welche in Umfangsrichtung der Wicklung nacheinander in einem Bereich von jeweils 45° einschaltbar sind. Eine vierpolige Maschine ist im Aufbau und in der Fertigung unproblematisch und erlaubt dennoch bei elektrischer Kommutierung die Erzeugung einer gleichmäßigen Stromaufteilung in den einzelnen Phasen der Wicklung. Die Vorteile einer vierpoligen, vierphasigen Ausführung liegen also darin, daß hier eine wirtschaftlich vertretbare und dennoch voll funktionsfähige Ausführung realisiert wird. Eine höhere Phasenzahl ergäbe einen vermehrten Wicklungsaufwand, eine kleinere Phasenzahl würde die Gleichförmigkeit der induzierten Spannung beeinflussen. Weiterhin können bei einer vierphasigen Ausführung jeweils zwei Phasen bifilar gewickelt und dann die beiden anderen Phasen um 45° geometrisch versetzt werden. Durch die bifilare Ausführung wird mit dem Wickelaufwand einer zweiphasigen Wicklung eine vierphasige Wicklung realisiert.

Eine besonders zweckmäßige Ausgestaltung die erfindungsgemäßen elektrischen Maschine besteht darin, zur Erzielung einer abgeflachten Spannungskurve mit einem der Trapezform angenähertem Verlauf die Magnetpole mit einer Polabhebung zu versehen mit zunehmender Luftspaltbreite zur Polmitte hin. Eine nahezu vollständige Gleichförmigkeit der induzierten Spannung (Trapezform) wird nämlich erreicht, indem die Magnetpole so aufgebaut sind, daß eine Polabhebung eine Luftspalterweiterung über den Umfang eines Poles ausbildet. Durch eine entsprechende Bemessung der Polabhebung ist es möglich, anstelle einer sinusförmigen induzierten Spannung durch Abflachung der sinusförmigen Kuppe eine im Bereich des Spannungsmaximums konstante induzierte (trapezförmige) Spannung zu erreichen.

## Zeichnung

Ein Ausführungsbeispiel der Erfindung ist in der Zeichnung dargestellt und in der nachfolgenden Beschreibung näher erläutert. Es zeigen Figur 1 einen Schnitt durch die elektrische Maschine in schematischer Darstellung, Figur 2 ein Ausführungsbeispiel des Wickelschemas, Figur 3a und b geschrägte Anordnungen der Magnetpole und der Spulen, Figur 4 einen Rotor mit Polabhebung und Figur 5 den Verlauf der induzierten Spannung eines nach der Erfindung aufgebauten Tachogenerators.

## Beschreibung des Ausführungsbeispiels

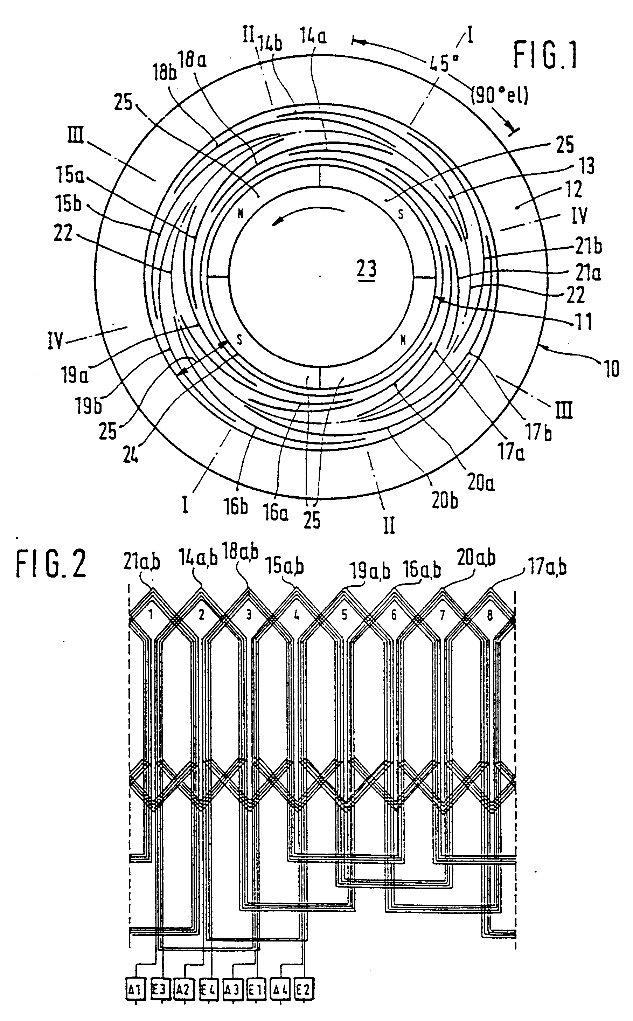

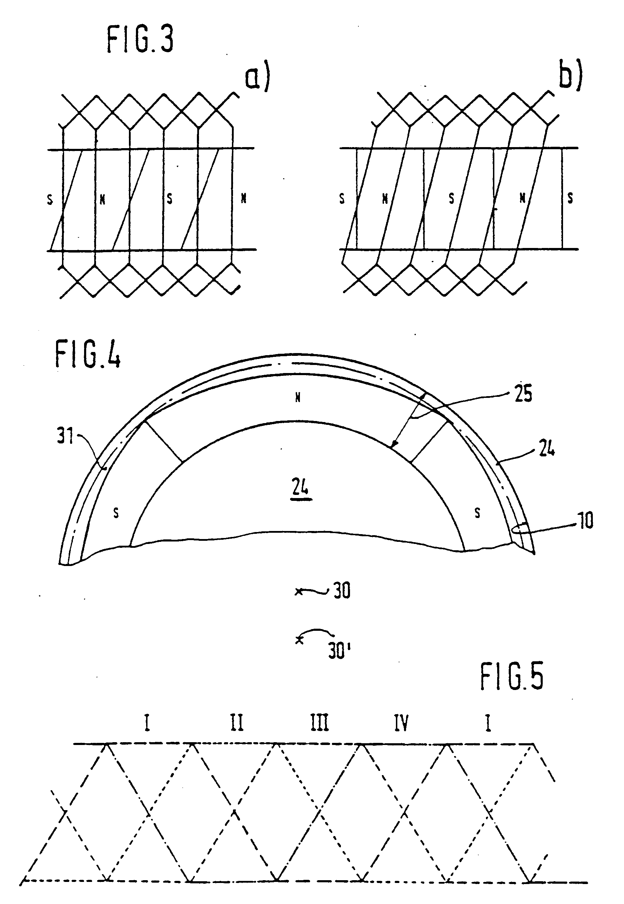

In Figur 1 ist als Beispiel einer erfindungsgemäßen elektrischen Maschine eine Innenläufermaschine dargestellt mit einem Stator 10 und einem Rotor 11. Als magnetisches Rückschlußteil besitzt der Stator 10 ein Statorblechpaket 12, auf dessen Innenwand ein Spulenkörper 13 sitzt. In den Spulenkörper sind bifilar gewickelte Teilspulen 14a, b, 15a, b, 16a, b und 17a, b des ersten und dritten Wicklungsstranges eingelegt. Da es sich beim Ausführungsbeispiel um eine vierpolige Maschinenausführung handelt, ergänzen entsprechende, um 45° räumlich versetzte Teilspulen 18a, b, 19a, b, 20a, b und 21a, b für den zweiten und vierten Wicklungsstrang die Wicklung. Die Wicklung ist vierphasig ausgebildet, so daß je Phase oder Wicklungsstrang insgesamt vier Spulen mit jeweils zwei Teilspulen vorhanden sind, welche in Umfangsrichtung nacheinander in einem Bereich von jeweils 45° (90° elektrisch) durch eine nicht dargestellte elektronische Kommutierungsvorrichtung einschaltbar sind. In Figur 2 ist eine mögliche Schaltfolge der Teilspulen dargestellt. Die acht Teilspulen einer Phase werden unter Berücksichtigung des Wickelsinns in Reihe geschaltet. Aus Figur 2 ist außerdem die bifilare Ausführung der Wicklung zu erkennen. Die Phase zwischen A1 und E1 und die Phase zwischen A3 und E3 werden gemeinsam gewickelt und nachher gegensinnig geschaltet, ebenso die Phasen A2 bis E2 und A4 bis E4.

Der Rotor 11 der elektrischen Maschine besteht beim gezeichneten Ausführungsbeispiel aus einem Kern 23, welcher einteilig mit einer nicht dargestellten Welle ausgebildet sein kann. Auf dem Kern sind direkt einander anschließend oder mit geringem Abstand vier Magnetsegmente 25 aufgeklebt, welche in radialer Richtung magnetisiert sind und abwechselnd zwei Nordpole und zwei Südpole bilden. Die Magnete haben gemäß Figur 4 in Magnetmitte eine geringere Dicke, wodurch sich eine Polabhebung 31 in Magnetmitte ergibt. Es ist sowohl eine sehnenartige Abhebung mit nicht kreisförmiger Magnetkrümmung wie auch eine Abhebung durch Versatz der beiden Mittelpunkte 30, 30' mit entsprechend vergrößerten Krümmungsradien der Magnete möglich. Eine derartige Anordnung eignet sich besonders für eine bürstenlose, mit hohen Drehzahlen betreibbare, elektronisch kommutierte Gleichstrommaschine. Die Anordnung könnte auch derardat getroffen sein, ausgeprägte, geblechte Polschuhe vorhanden sind, auf deren Schenkeln, bzw. zwischen deren Schenkeln die Dauermagnete sitzen. Anstelle der dauermagnetischen Erregung kann der Rotor auch mit einer Wicklung versehen sein.

Die gezeigte Maschine ist derart aufgebaut, daß nahezu der gesamte Luftspalt von der Wicklung ausgefüllt ist. Hierbei bleibt nur ein geringer Spalt 24 als Freiraum zwischen dem Stator 10 und dem Rotor 11, der Rest des Luftspaltes nimmt den Spulenkörper 13 mit den einzelnen Spulen auf. Die Teilspulen 14a, b bis 21a, b werden im Spulenkörper 13 symmetrisch zur Mittellinie 18 derart eingelegt, daß mit der inneren Lage, beispielsweise am innersten Ende der Teilspule 14a begonnen wird. Entgegen dem Uhrzeigersinn werden nun jeweils um 45° fortschreitend die Wicklungen 18a, 15a, 19a usw. eingefügt. Zum Einlegen der letzten Teilspule 21a muß der hintere Teil der Teilspule 14a hochgehoben werden, damit die Teilspule 21a mit ihrer vorderen Hälfte unter der hinteren Hälfte der Teilspule 14a zu liegen kommt. Auf diese Weise wir erreicht, daß sämtliche Spulen symmetrisch mit einer obenliegenden und einer untenliegenden Spulenhälfte eingelegt sind. Anschließend werden die äußeren Teilspulen 14b bis 21b eingefügt, beginnend z. B. mit der innenliegenden Spulenseite der Wicklung 14b. Auf diese werden im Uhrzeigersinn um jeweils 45° verschoben die Teilspulen 21b, 17b, 20b usw. aufgelegt und das Ende der letzten Teilspule unter dem Anfang der Teilspule 14b eingefügt. Die Teilspulen 14a, b bis 21a, b sind beim Ausführungsbeispiel gleich ausgebildet mit gleicher Spulenweite und besitzen jeweils die gleiche Windungszahl. Sie sind auf dem Spulenkörper 13 so angeornet, daß die zusammengehörigen Teilspulen in Reihe geschaltet werden können.

Der als Träger der Wicklung dienende Spulenkörper 13 besteht aus Kunststoff. Er wird nach dem Einlegen der Teilspulen 14a, b bis 21a, b gemeinsam mit dem Stator 10 in Gießharz eingebettet, so daß der Stator 10 mit den Wicklungen zusammen eine mechanische Einheidaßt bildet, ohne daß Zähne am Stator 10 vorgesehen sind. Andererseits ist es selbstverständlich auch möglich, die Teilspulen 14a, b bis 21a, b in Nuten des Stators 10 anzuordnen, wobei die Nuten jedoch nicht zur Leitung des magnetischen Flusses sondern lediglich zur Aufnahme der Formspulen dienen, da die Zähne des Stators bei einem Motor hoher Drehzahl aufgrund starker Ummagnetisierung-, bzw. Eiseverluste eine große Erwärmung ermöglichen, bei einem Tachogenerator jedoch aufgrund von Energieunterschieden im magnetischen Kreis zwischen Zahn und Nut eine Verzerrung der induzierten Spannung hervorrufen würden.

Figur 5 zeigt den Verlauf der in den Teilspulen 14a, b bis 21a, b induzierten Spannungen bei Ausbildung der erfindungsgemäßen elektrischen Maschine als Tachogenerator mit vergrößertem Luftspalt 24, 31 in Umfangsrichtung über den Magnetpolen zur Steuerung eines elektronisch kommutierten bürstenlosen Gleichstrommotors. Die Maschine ist vierphasig ausgebildet, jede Phase wird z. B. durch induktive oder optoelektronische Geber oder durch Hallgeber auf einem Winkel von 45° (90° el.) eingeschaltet. Die Ansteuerung der verschiedenen Teilspulen erfolgt in der Art, daß die mit dem Rotor bewegten Geber oder Teile derselben die Stellung des Rotors anzeigen und die Einschaltung der jeweiligen Teilspule bestimmen. Die Anordnung ist durch die Gestaltung der Magnetsegmente oder durch eine entsprechende Gestaltung von Polschuhen mit Hilfe einer Polabhebung nach Figur 4 so getroffen, daß sich eine nahezu exakt trapezförmige induzierte Spannung in den einzelnen Teilspulen ergibt. Durch die symmetrische Anordnung der Teilspulen zur Mittellinie 22 ergibt sich wegen der Kompensation der unterschiedlichen Abstände der Spulenleiter zu den Magnetpolen in allen Sektoren des Stators jeweils eine gleichgroße induzierte Spannung, wobei die zusammengehörenden Teilspulen jeweils auf einem Winkel von 45° (90° el.) eingeschaltet sind; dieser Bereich entspricht dem durch die Geometrie der Wicklung und der Magnete bestimmten, annähernd gleichbleibenden Maximum der induzierten Spannungen (I-IV) in den entsprechenden Teilspulen. Durch die innen und außen jeweils gleichmäßige Überlappung der einzelnen Teilspulen erhält man eine vollständig symmetrische Anordnung, welche die notwendige Gleichmäßigkeit der induzierten Spannungen gewährleistet. Die Einschaltdauer der Phase I ist in Figur 1 unter einem Winkel von 45° (90° el.) eingezeichnet, die drei restlichen Phasen schließen sich mit jeweils gleicher Einschaltdauer an, so daß die elektronische Kommutierung immer in dem Augenblick erfolgt, wo der Spannungsabfall an der vorhergehenden Phase einsetzt. Die Darstellung in Figur 5 ist zwar idealisiert, gibt jedoch im wesentlichen den Verlauf der einzelnen Spannungen an.

Bezüglich der Gestaltung der Maschine sei noch erwähnt, daß anstelle der dargestellten Innenläufer-Maschine auch die Bauart einer Außenläufer-Maschine oder einer Scheibenläufer-Maschine gewählt werden kann. Grundsätzlich ergeben sich hierbei keine anderen Verhältnisse.

Durch die erfindungsgemäße Gestaltung der elektrischen Maschine, insbesondere bei bürstenloser Ausbildung mit elektronischer Kommutierung, ergibt sich beim Betrieb als Gleichstrommotor eine große Laufruhe bis zu höchsten Drehzahlen; beim Betrieb als Generator, insbesondere als Tachogenerator, wird die Welligkeit der Meßspannung praktisch vollständig unterdrückt. Die in Figur 1 dargestellte symmetrische Wicklunganordnung, bei der im Kreuzungsbereich der Spulenköpfe in einer Umfangsrichtung die nachfolgenden Teilspulen die vorhergehenden Teilspulen beiderseits außen umgreifen und in der anderen Umfangsrichtung die nachfolgenden Teilspulen innerhalb der vorhergehenden Teilspulen liegen, eignet sich insbesondere für im Luftspalt untergebrachte Wicklungen, weil dort die einzelnen Wicklungsstränge empfindlicher sind gegen unterschiedliche Streuflüsse. Diese bewirken an verschiedenen Orten im Luftspalt, d.h. in verschiedenen, übereinanderliegenden Spulen unterschiedliche induzierte Spannungen, welche die Welligkeit verursachen. Um die Unterschiede bei den induzierten Spannungen zu vermeiden und die unterschiedlichen Flußverkettungen auszuschließen ist die erfindungsgemäße Unterteilung der Spulen vorgenommen worden, wobei diese einfach oder mehrfach erfolgen kann und die Teilspulen anschließend in Reihe geschaltet werden. Unterschiede bei Rechts- oder Linkslauf werden praktisch vollständig ausgeschlossen.

Eine weitere Möglichkeit für eine zweckmäßige Wicklungsanordnung mit ebenfalls weitgehend gleichmäßigem Spannungsverlauf ergibt sich bei einer teilweise überlappenden Anordnung der Spulen. Die Unterbringung der Teilspulen könnte hierbei so vorgenommen werden, daß in den Spulenkörper 13 zunächst die unteren Teilspulen 15a und 17a eingelegt werden und hierüber in beiden Umfangsrichtungen die unteren Teilspulen 18a und 19a, bzw. 20a und 21a.

Darüber müßten in entsprechender Anordnung die oberen Teilspulen 16b und 14b liegen, an die sich wiederum in beiden Umfangsrichtungen die oberen Teilspulen 18b und 19b, bzw. 20b und 21 b anschließen. Bei dieser teilweise überlappenden Anordnung können die Teilspulen nacheinander jeweils mit beiden Spulenseiten in die Nuten des Spulenkörpers 13 eingelegt werden.

Eine weitere Möglichkeit der Wicklungsanordnung ist ein Aufbau mit zur Längsache geschrägten Spulen, bzw. geraden Spulen und zur Längsachse geschräten Magnetpolen, wie dies in den Figuren 3a und 3b dargestellt ist. Grundsätzlich ergeben sich auch hierbei keine anderen Verhältnisse bezüglich der induzierten Spannungen, jedoch hat die Maschine die bekannten Vorteile einer geschrägten Wicklung.


**Patentansprüche**

1. Elektrische Maschine, insbesondere bürstenloser Gleichstrommotor oder Tachogenerator, mit einem vorzugsweise mit Permanentmagneten (25) bestückten Rotor (11) und mit einer im Luftspalt zwischen Rotor und Stator (10) auf einem Träger angeordneten, mehrphasigen, phasenverschoben ansteuerbaren Wicklung, welche vorzugsweise von einem Träger (13) aus elektrisch nichtleitendem, insbesondere diamagnetischem Material gehalten ist, wobei jede Phase der Wicklung wenigstens zwei Spulen aufweist, welche zu den Spulen der anderen Phase(n) überlappend angeordnet sind, dadurch gekennzeichnet, daß jede Spule (14 bis 21) in mindestens zwei gleiche, Teilspulen (14a, b bis 21a, b) unterteilt ist, wobei die Teilspulen jeder Spule auf dem Träger symmetrisch zur Mittellinie übereinander angeordnet sind und wobei die Teilspulen einer Phase unter Zwischenfügung der Teilspulen einer anderen Phase in der Wicklung angeordnet sind.

2. Elektrische Maschine nach Anspruch 1, dadurch gekennzeichnet, daß im Kreuzungsbereich der Spulenköpfe in einer Umfangsrichtung die nachfolgenden Teilspulen der nachfolgenden Phase die vorhergehenden Teilspulen der vorhergehenden Phase beiderseits außen umgreifen und in der anderen Umfangsrichtung die nachfolgenden Teilspulen der nachfolgenden Phase innerhalb der vorhergehenden Teilspulen der vorhergehenden Phase liegen.

3. Elektrische Maschine nach einem der vorhergehenden Ansprüche, dadurch gekennzeichnet, daß alle Teilspulen (14a, b bis 21a, b) gleiche Spulenweite habend den gleichen Sektor am Stator (10) überspannen.

4. Elektrische Maschine nach einem der vohergehenden Ansprüche, gekennzeichnet durch eine vierpolige Ausführung des Rotors (11) mit vier Spulen (14 bis 17; bzw. 18 bis 21) je Phase, welche in Umfangsrichtung nacheinander in einem Bereich von jeweils 45° (90° el)einschaltbar sind.

5. Elektrische Maschine nach einem der vohergehenden Ansprüche, gekennzeichnet durch die Ausbildung als Innenläufermaschine.

6. Elektrische Maschine nach Anspruch 5, dadurch gekennzeichnet, daß die Statorwicklung (14 bis 21) auf der Innenwand eines Statorblechpaketes (12) im Luftspalt (25) sitzt und in Kunststoff eingebettet ist.

7. Elektrische Maschine nach einem der vorhergehenden Ansprüche, dadurch gekennzeichnet, daß die Teilspulen (14a, b bis 21a, b) auf einem kunststoffspulenkörper (13) sitzen.

8. Elektrische Maschine nach Anspruch 6, dadurch gekennzeichnet, daß die Teilspulen (14a, b bis 21a, b) gemeinsam mit dem Spulenkörper (13) und dem Stator (10) mit kunststoff umhüllt sind.

9. Elektrische Maschine nach einem der vorhergehenden Ansprüche, dadurch gekennzeichnet, daß die Spulen (14a, b bis 21a, b) gegen die Magnetpole oder die Magnetpole gegen Spulen um einen Schrägungswinkel in Achsrichtung geschrägt sind.

10. Elektrische Maschine nach einem der vorhergehenden Ansprüche, gekennzeichnet durch eine Vergrößerung des Luftspalts (24, 31) in Umfangsrichtung über den Magnetpolen zur Polmitte hin, derart, daß sich über einen konstanten Betrag der Flußverkettung der Sp ulen eine trapezförmige induzierte Spannung (Figur 5) ergibt.


**Claims**

1. Electric machine, in particular a brushless d.c. motor or tachometer generator, having a rotor (11), preferably equipped with permanent magnets (25) and having a multi-phase phase-shifted controllable winding, which is arranged on a carrier in the air gap between rotor and stator (10) and is preferably held by a carrier (13) made of electrically non-conductive, in particular diamagnetic material, each phase of the winding having at least two coils, which are arranged overlapping with respect to the coils of the other phase(s), characterized in that each coil (14 to 21) is subdivided into at least two identical coil sections (14a, b to 21a, b), the coil sections of each coil being arranged above one another on the carrier symmetrical to the centre line, and the coil sections of one phase being arranged in the winding with the interposition of the coil sections of another phase.

2. Electric machine according to Claim 1, characterized in that in the crossing region of the coil ends the following coil sections of the following phase embrace the preceding-coil sections of the preceding phase outside on both sides in one peripheral direction, and in the other peripheral direction the following coil sections of the following phase are located inside the preceding coil sections of the preceding phase.

3. Electric machine according to one of the preceding claims, characterized in that all coil sections (14a, b to 21a, b) have the same coil width and span the same sector at the stator (10).

4. Electric machine according to one of the preceding claims, characterized by a quadruple embodiment of the rotor (11) with four coils (14 to 17; or 18 to 21) per phase, which can be connected one after another in the peripheral direction in a range of 45° (90° el) in each case.

5. Electric machine according to one of the preceding claims, characterized by being constructed as an internal rotor machine.

6. Electric machine according to Claim 5, characterized in that the stator winding (14 to 21) is seated on the inner wall of a stator laminated core (12) in the air gap (25) and is embedded in plastic.

7. Electric machine according to one of the preceding claims, characterized in that the coil sections (14a, b to 21a, b) are seated on a plastic coil former (13).

8. Electric machine according to Claim 6, characterized in that the coil sections (14a, b to 21a, b) are covered by plastic in common with the coil former (13) and the stator (10).

9. Electric machine according to one of the preceding claims, characterized in that the coils (14a, b to 21a, b) are inclined with respect to the magnet poles, or the magnet poles are inclined with respect to the coils by an angle of inclination in the axial direction.

10. Electric machine according to one of the preceding claims, characterized by an enlargement of the air gap (24, 31) in the peripheral direction above the magnet poles towards the pole centre in such a way that a trapezoidal induced voltage (Figure 5) results over a constant amount of the flux linkage of the coils.


**Revendications**

1. Machine électrique, notamment moteur à courant continu sans balai ou générateur tachymétrique avec un rotor (11) équipé de préférence avec des aimants permanents (25) et avec un enroulement polyphasé, susceptible d'être commandé en décalage de phases, disposé sur un support dans l'entrefer entre le rotor et le stator (10), cet enroulement étant, de préférence, maintenu par un support (13) en matériau non électriquement conducteur, notamment un matériau diamagnétique, chaque phase de cet enroulement comportant au moins deux bobines qui sont disposées par rapport aux bobines de(s) l'autre(s) phase(s) de façon à se chevaucher, machine caractérisée en ce que chaque bobine (14 à 21) est subdivisée en au moins deux bobines partielles (14a, 14b à 21a, 21b), les bobines partielles de chaque bobine étant disposées sur le support l'une au-dessus de l'autre symétriquement par rapport à la ligne médiane et les bobines partielles d'une phase étant disposées dans l'enroulement avec interposition de bobines partielles d'une autre phase.

2. Machine électrique selon la revendication 1, caractérisée en ce que dans la zone de croisement des têtes de bobines, dans l'un des sens périphériques, les bobines partielles suivantes de la phase suivante, entourent extérieurement des deux côtés, les bobines partielles précédentes de la phase précédente, et, dans l'autre sens périphérique, les bobines,partielles suivantes de la phase suivante, se situent à l'intérieur des bobines partielles précédentes de la phase précédente.

3. Machine électrique selon une des revendications 1 et 2, caractérisée en ce que toutes les bobines partielles (14a, 14b à 21a, 21b) ont la même largeur de bobine et recouvrent le même secteur sur le stator (10).

4. Machine électrique selon une des revendications 1 à 3, caractérisée par une réalisation quadripolaire du rotor (11) avec quatre bobines (14 à 17 ; ou bien 18 à 21) par phase, ces bobines étant susceptibles d'être mises en circuit successivement en direction périphérique sur une étendue de respectivement 45° (90° angle électrique).

5. Machine électrique selon une des revendications 1 à 4, caractérisée par sa réalisation sous la forme d'une machine à rotor interne.

6. Machine électrique selon la revendication 5, caractérisée en ce que l'enroulement du stator (14 à 21) est placé sur la paroi interne d'un paquet de tôles de stator (12) dans l'entrefer (25) et est enrobé dans de la matière plastique.

7. Machine électrique selon une des revendications 1 à 6, caractérisée en ce que les bobines partielles (14a, 14b à 21a, 21b) sont placées sur un corps de bobine (13) en matière plastique.

8. Machine électrique selon la revendication 6, caractérisée en ce que les bobines partielles (14a, 14b à 21a, 21b) sont enrobées de matière plastique en même temps que le corps de bobine (13) et le stator (10).

9. Machine électrique selon une des revendications 1 à 8, caractérisée en ce que les bobines (14a, 14b à 21a, 21b) sont inclinées d'un angle d'inclinaison en direction axiale par rapport aux pôles magnétiques, ou bien les pôles magnétiques par rapport aux bobines.

10. Machine électrique selon une des revendications 1 à 9, caractérisée par un accroissement de l'entrefer (24, 31) en direction périphérique sur les pôles magnétiques en direction du milieu du pôle, de façon à obtenir une tension induite trapézoïdale, (figure 5) grâce à une valeur constante de l'enchaînement du flux des bobines.

FIG.1

FIG.2

8

## FIG.3

a)

b)

## FIG.4

## FIG.5